# EUROPEAN PATENT APPLICATION

(11) **EP 2 645 132 A2**
(43) Date of publication of application: **02.10.2013**
(21) Application number: 13161854.8
(22) Date of filing: 29.03.2013
(51) Int. Cl.: G01V 1/28

(54) **Method for Time-Lapse Wave Separation**

(30) Priority: 30.03.2012 US 201261617918 P
(71) Applicant: CGGVeritas Services SA, 91300 Massy (FR)
(72) Inventor: Cotton, Julien, 91300 MASSY (FR); Bianchi, Thomas, 91300 MASSY (FR)
(74) Representative: Regimbeau

(57) **Abstract**

A method for processing seismic data acquired using the same seismic survey setup over long periods of time includes acquiring sets of seismic data using the same seismic survey setup over multiple days, the sets being gathered as repeated seismic data. The method further includes estimating a time-variable wavelet corresponding to unwanted waves, and determining a propagation of the time-variable wavelet, which propagation is assumed to be constant in time, by solving an inverse problem using the repeated seismic data and the estimated time-variable wavelet. The method also includes extracting signal data by subtracting a convolution of the estimated time-variable wavelet and the propagation from the repeated seismic data.

## Description

### CROSS REFERENCE TO RELATED APPLICATIONS

This application claims priority and benefit from U.S. Provisional Application No. 61/617,918, filed on March 30, 2012, for "Time-Lapse Wave Separation," the entire content of which is incorporated herein by reference.

### BACKGROUND

### TECHNICAL FIELD

Embodiments of the subject matter disclosed herein generally relate to methods for processing repeated seismic data acquired using the same seismic survey setup and, more particularly, to mechanisms and techniques for separating seismic waves having different behaviors over the time-lapse domain also called calendar time domain referring to repeated seismic acquisition. To separate waves in this particular domain, the convolution between a constant propagation operator (constant over the calendar time, yet unknown) and a time-lapse variable estimated wave is subtracted from the repeated seismic data. The constant propagation operator that is obtained by solving an inverse problem using the repeated seismic data.

### DISCUSSION OF THE BACKGROUND

A widely-used technique for monitoring oil or gas reservoirs is the seismic imaging of subsurface geophysical structures. The term "seismic imaging" refers to acquiring and analyzing data related to reflected seismic waves after generating seismic waves toward the subsurface structure. The time-lapse wave separation is well suited for processing continuous 4D seismic (repeated seismic) data.

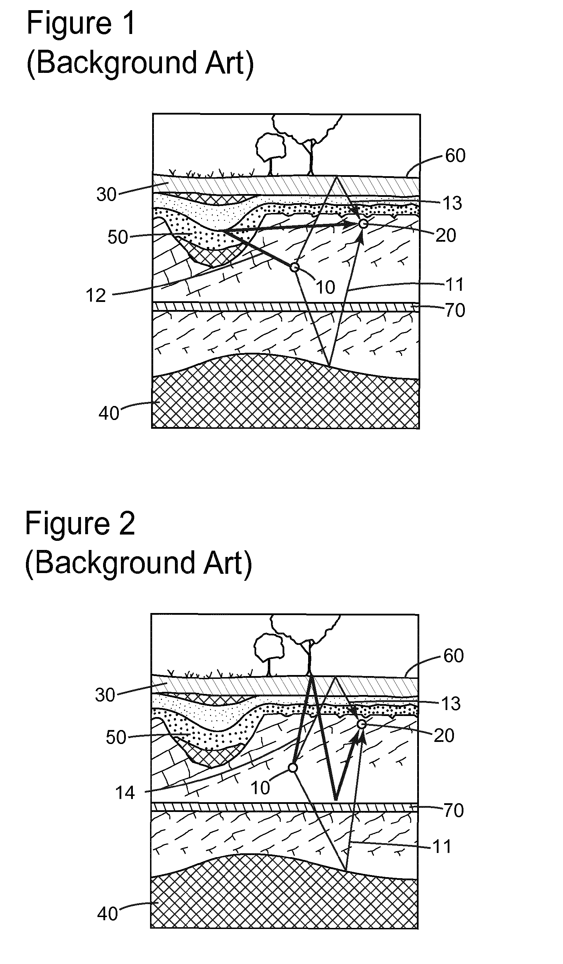

As illustrated in Figures 1-3, a continuous 4D seismic survey setup includes at least one source 10 and a sensor 20 buried below weathering layers 30 (so that the source and sensor and, thus, the target reflections, are not affected by any climatic changes). The source 10 produces seismic waves (i.e., a signal) that propagate through the subsurface structure and are reflected at the interfaces between layers in which the wave propagation velocity differs. Thus, part of the seismic wave energy produced by the source 10 is reflected and detected by the sensor 20. Although the seismic survey target is the reservoir 40, the detected wave is an overlap of target waves 11 and other unwanted waves.

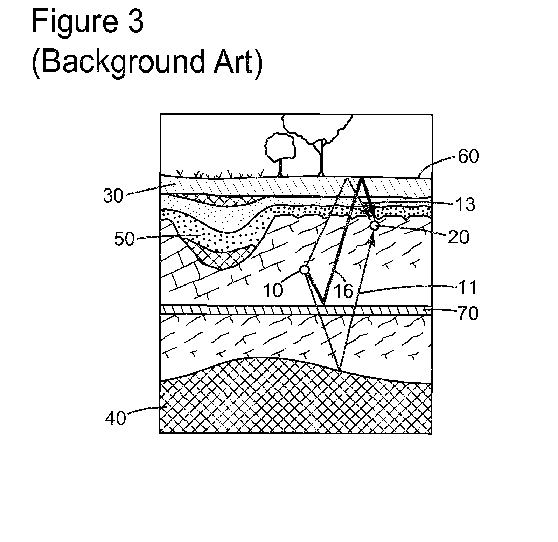

For example, as illustrated in Figure 1, unwanted waves include a reflection 12 from a filled ditch or karst 50 connected with the weathering zone and a reflection 13 from the air-earth interface 60. In another example illustrated in Figure 2, unwanted waves include a reflection 14 which is reflected twice before reaching the sensor 20: the first time by the air-earth interface 60, and the second time by a layer 70 located above the reservoir 40. In yet another example in Figure 3, the unwanted waves include a reflection 16 which is also reflected twice before reaching the sensor 20: the first time by the layer 70 and the second time by the air-earth interface 60. Unwanted waves that travel through the weathering layers are affected by climatic changes (arrival time at the sensor and this amplitude change depending on temperature and moisture in the weathering layers). The unwanted waves degrade the quality of the final image.

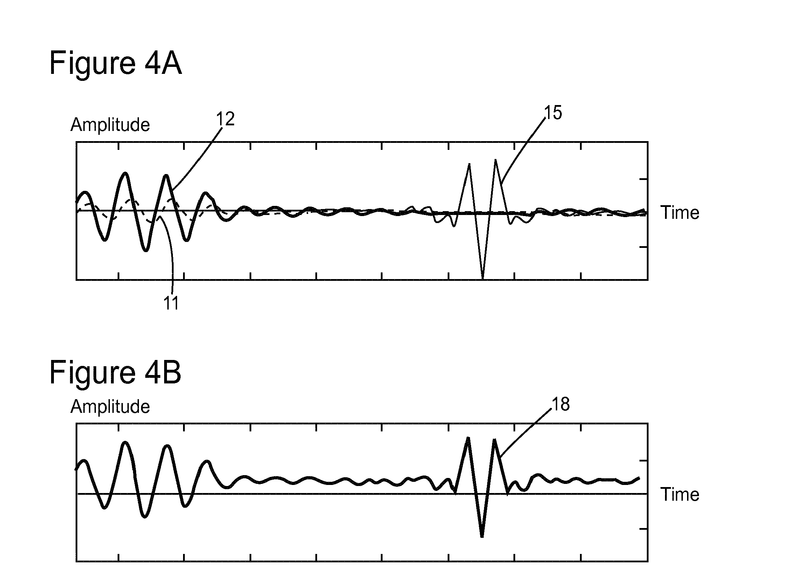

Figure 4A is a graph in which the y-axis represents amplitudes as detected by sensor 20, and the x-axis represents two-way times (from the source 10 to the sensor 20 via at least one reflection point). The detected amplitude includes a wave 11 corresponding to the target reflection, and unwanted reflections 12 and 15. Some of the unwanted waves come at the same time (and overlap) with the target waves, but some other unwanted waves may be separate in time. The longer a wave travels, the more it is attenuated, and the lower the detected amplitude.

The sensor 20 is unable to distinguish between waves as differently marked in Figure 4A. The detected amplitude versus time 18 illustrated in Figure 4B which is called a seismogram is an overlap of the target wave and the unwanted waves. Although Figures 1-3, 4A and 4B refer to a pair source-sensor, it should be understood that a seismic survey setup usually includes plural sensors and may also include plural sources at known positions relative to one another.

In order to monitor an oil and/or gas reservoir evolution during production, seismic measurements are repeated at time intervals that are large relative to the duration of the seismic measurement. Conventionally, seismic measurements are repeated each year or decade. However, to monitor a reservoir during production, a "continuous" 4D data acquisition means that seismic measurements are performed 4 to 6 times a day, allowing an oil and gas company to make rapid decisions and adjust the production plan.

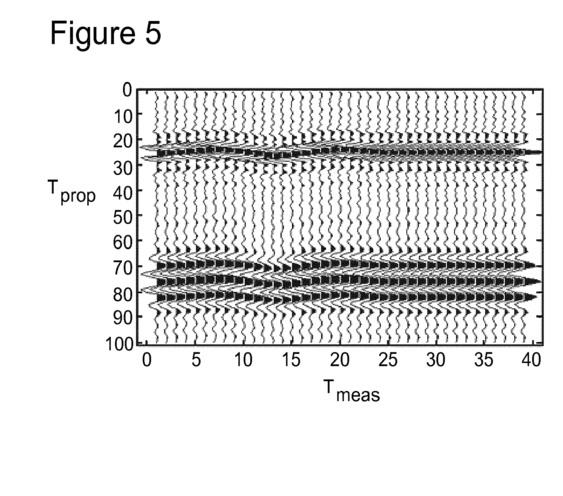

The data acquired during different measurements is gathered in 4D data sets, the four dimensions being (1) amplitude versus (2) time while data is acquired, (3) distance between the source and the sensor, and then, (4) time as to when the measurement was performed. These 4D data sets are known as repeated seismic data. A subset of repeated seismic data is illustrated in Figure 5, where each wavy up-down line is a seismogram (i.e., amplitude versus time graph) acquired in one measurement. The y-axis is propagation time Tₚᵣₒₚ from the source to the sensor, in seconds. The x-axis represents a time (Tₘₑₐₛ) when the measurement was performed, for example, daily. Note that the values on x-axis are not expressed in time unite, but a first measurement a second measurement, etc.

Accordingly, it would be desirable to provide reliable methods (and devices performing these methods), to accurately extract the target wave (i.e., reflected by the monitored reservoir) from the detected signal that also includes unwanted waves, in order to be able to monitor the target based on repeated seismic data.

### SUMMARY

According to one exemplary embodiment, there is a method for processing seismic data acquired with the same seismic survey setup over long periods of time. The method includes acquiring sets of seismic data using the same seismic survey setup over multiple days, the sets being gathered as repeated seismic data. The method further includes estimating a time-variable wavelet corresponding to unwanted waves, and determining a propagation of the time-variable wavelet, which propagation is assumed to be constant in time, by solving an inverse problem using the repeated seismic data and the estimated time-variable wavelet. The method also includes extracting signal data by subtracting a convolution of the estimated time-variable wavelet and the propagation from the repeated seismic data.

According to another exemplary embodiment, there is a computer-readable storage medium non-transitory storing executable codes which, when executed on a computer, make the computer process repeated seismic data gathered from sets of seismic data acquired using the same seismic survey setup over multiple days. The method includes estimating a time-variable wavelet corresponding to unwanted waves, and determining a propagation of the time-variable wavelet, which propagation is assumed to be constant in time, by solving an inverse problem using the repeated seismic data and the estimated time-variable wavelet. The method further includes extracting signal data by subtracting a convolution of the estimated time-variable wavelet and the propagation from the repeated seismic data.

According to another embodiment there is a seismic data processing device including an interface configured to receive repeated seismic data gathered using the same seismic survey setup over multiple days, and a data processing unit connected to the interface. The data processing unit is configured to process the repeated seismic data by (1) estimating a time-variable wavelet corresponding to unwanted waves, (2) determining a propagation that is constant in time by solving an inverse problem using the gathered repeated seismic data and the estimated time variable wavelet, and (3) extracting signal data by subtracting a convolution of the estimated time-variable wavelet and the propagation from the repeated seismic data.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a seismic source and a seismic sensor pair;

Figure 2 is a schematic diagram of another seismic source and a seismic sensor pair;

Figure 3 is a schematic diagram of another seismic source and a seismic sensor pair;

Figure 4A is a graph illustrating different reflected waves reaching the sensor;

Figure 4B is a graph illustrating a seismogram;

Figure 5 illustrates repeated seismic data for one sensor;

Figure 6 is a flowchart of a method for processing seismic data acquired in the same seismic survey setup over long periods of time, according to an exemplary embodiment;

Figure 7 is a graph illustrating one manner of estimating the time-variable wavelet according to an exemplary embodiment;

Figure 8 is a graph illustrating an estimated time-variable wavelet;

Figure 9 is a graph illustrating a propagation obtained using a method according to one exemplary embodiment;

Figure 10 is a graph illustrating the convolution of a time-variable wavelet and a propagation thereof, obtained using a method according to one exemplary embodiment;

Figure 11 is a graph illustrating signal data obtained using a method according to one exemplary embodiment;

Figure 12A is a graph illustrating repeated seismic data;

Figure 12B is a graph illustrating variation of the repeated seismic data in Figure 12A;

Figure 13A is a graph illustrating an estimate of the time-variable wavelet obtained using a method according to another exemplary embodiment;

Figure 13B is a graph illustrating variation of the data in Figure 13A;

Figure 14A is a graph illustrating the propagation of the time-variable wavelet obtained using a method according to another exemplary embodiment;

Figure 14B is a graph illustrating variation of the data in Figure 14A;

Figure 15A is a graph illustrating the signal data obtained using a method according to another exemplary embodiment;

Figure 15B is a graph illustrating variation of the signal data in Figure 15A; and

Figure 16 is a block diagram of a seismic data processing device according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of data processing for seismic survey data. However, the embodiments to be discussed next are not limited to this type of data being useable for 4D data acquired using other methods or for processing similar type of data acquired in similar circumstances.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In order to monitor the evolution of a reservoir (i.e., the target), signal data representing seismic waves reflected from the target need to be extracted from the recorded seismic data.

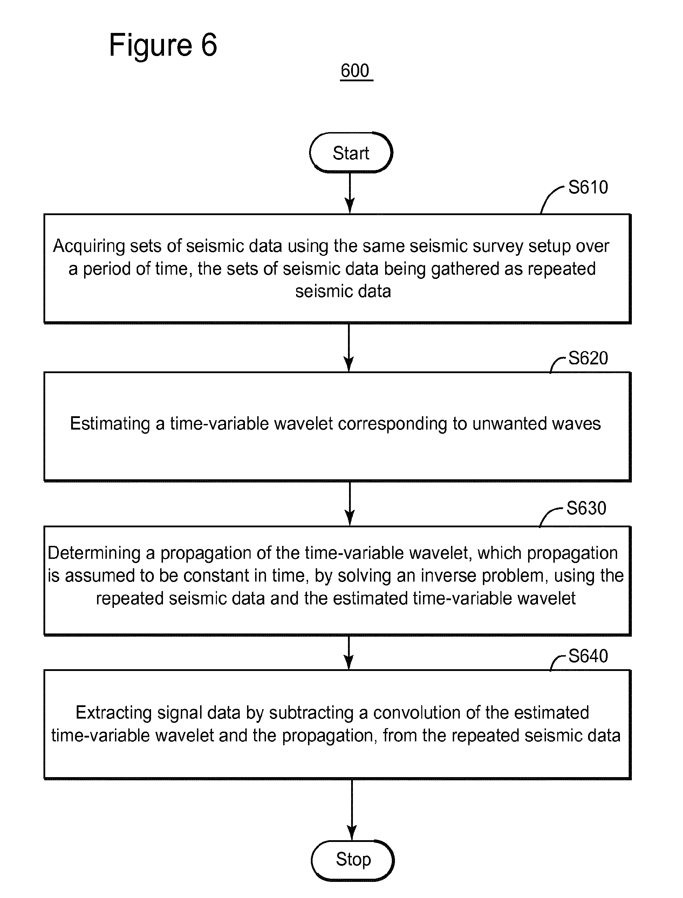

Thus, in an exemplary embodiment illustrated in Figure 6, a method 600 for processing seismic data acquired with the same seismic survey setup over long periods of time includes acquiring sets of seismic data using the same seismic survey setup over a period of time (e.g., multiple days), at S610. These sets are gathered as repeated seismic data (e.g., as illustrated in Figure 5). The repeated seismic data may represent an amplitude versus a propagation time as recorded by each sensor, for each instance of data-gathering during the multiple days.

The seismic survey setup may include one or more sources and plural sensors buried below a weathering layer of a surveyed formation. The seismic survey setup may be placed above an oil reservoir, and the data is then used to monitor the evolution of the reservoir.

Further, the method 600 includes estimating a time-variable wavelet corresponding to unwanted waves, at S620. The unwanted waves include noise and other wave reflections due to reflection at other locations than the subsurface. These unwanted waves may be represented as a convolution of a wavelet and a propagation operator none of which is known. Both the wavelet and the propagation operator may be variable in time. However, one can use a reasonable assumption that the wavelet varies in time while the propagator is constant in time.

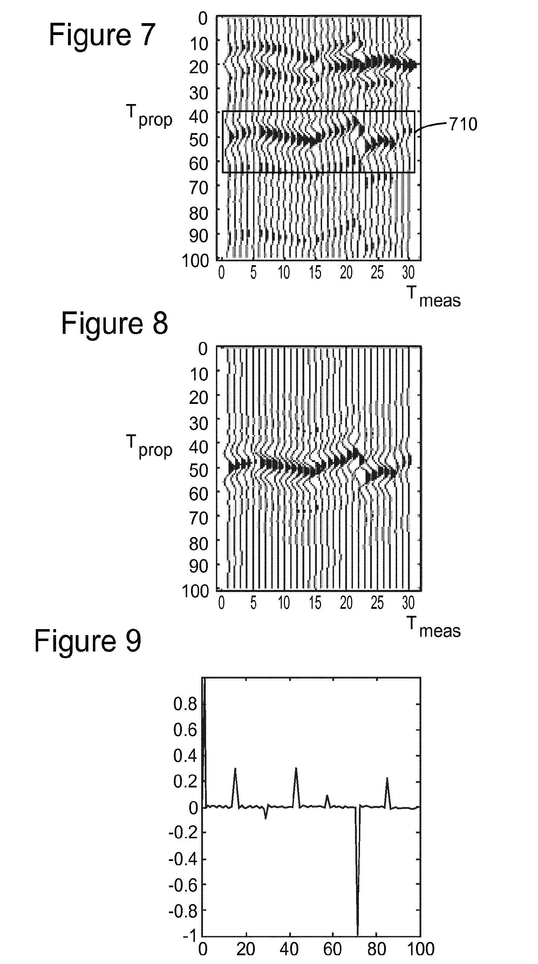

The time-variable wavelet may be estimated by identifying unwanted waves that do not interfere with the target waves. For example, in Figure 7, a window 710 corresponding only to unwanted waves based on the propagation time range may be selected in the repeated seismic data graph. This window 710 may be used to estimate the time-variable wavelet, because in the window 710 the unwanted waves do not overlap the target waves. The resulting time-variable wavelet estimate is illustrated in Figure 8.

However, in another example discussed below, the time-variable wavelet may be estimated using seismic data detected in another sensor receiving substantially the same unwanted waves as the first sensor, but (due to its location) the unwanted waves detected by the other sensor do not interfere with the target waves.

The method 600 also includes determining a propagation of the time-variable wavelet, at S630. This propagation is assumed to be constant over the calendar time (i.e., over all the measurements), and is determined by solving an inverse problem using the repeated seismic data and the estimated time-variable wavelet. For example, if *rsr* is the repeated seismic data of *m* measurements, each measurement having *n* samples as illustrated in Figure 5, *RSR* is a Fourier transform of *rsr, Y=RSR^{T}, pwu* is pure unwanted wave as illustrated in Figure 8, *PWU* is a Fourier transform of *pwu, G=PWU^{T},* then, in the frequency domain, a Fourier transform *X* of the propagation *p* is *X*=*(G^{T}G)⁻¹*.*G^{T}Y*. The resulting propagation vector *X* having amplitudes corresponding to *n* frequencies is illustrated in Figure 9.

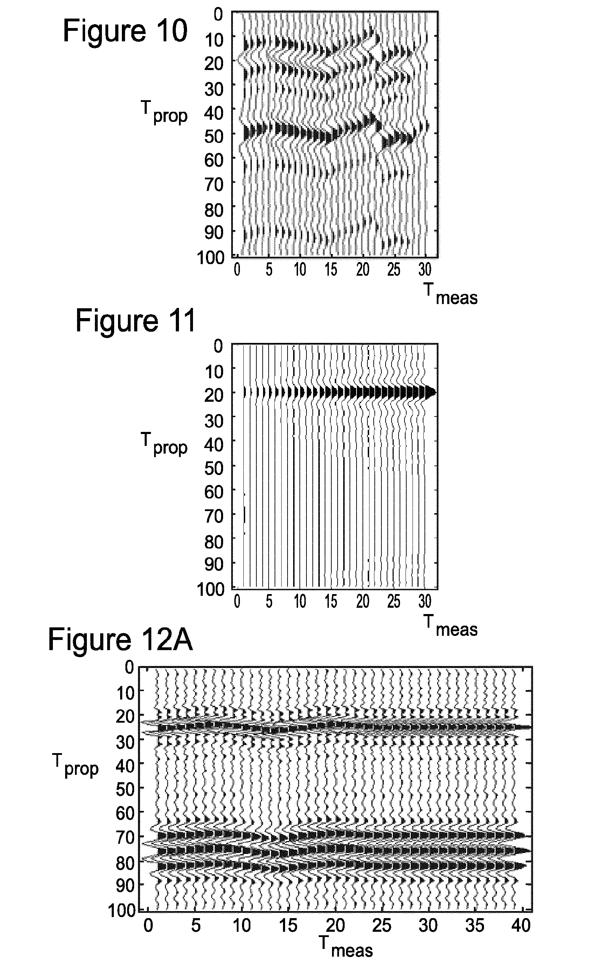

Finally, the method 600 includes extracting signal data (i.e., corresponding to waves reflected by the target) by subtracting a convolution of the estimated time-variable wavelet and the propagation from the repeated seismic data, at S640. For example, following the notation described above and *tr* being the signal data in time domain, while *TR* being the Fourier transform of *tr, TR*=*RSR-(PUW·X).* The inverse Fourier transform of *PUW·X* is illustrated in Figure 10 and the resulting *tr* (i.e. the inverse Fourier transform of TR) is illustrated in Figure 11.

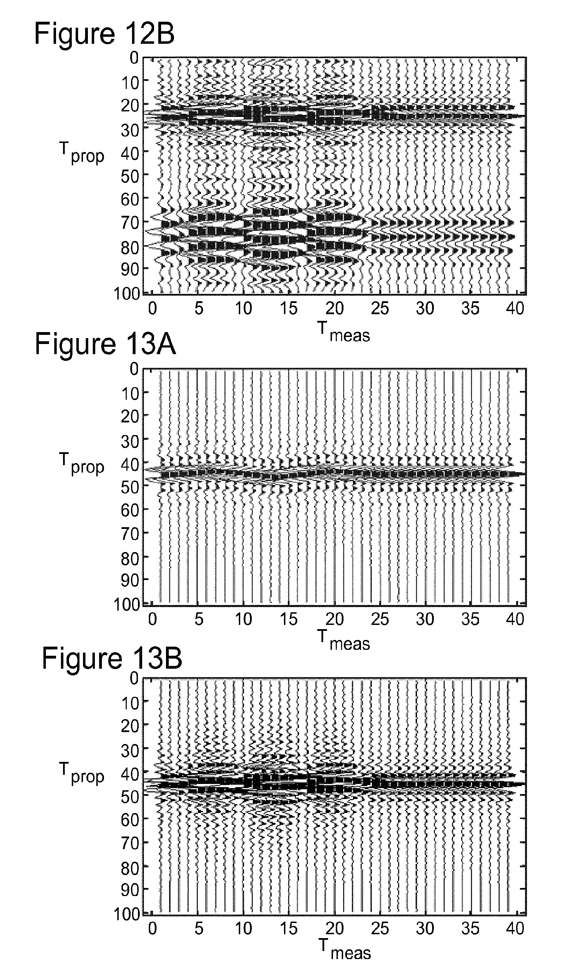

Steps S630 and S640 may be performed in frequency domain or in time domain as illustrated relative to another embodiment in Figures 12-15. Figure 12A illustrates repeated seismic data other than the repeated seismic data in Figures 5 and 7. Figure 12B is the variation of the repeated seismic data. Variations are defined as a subtraction of the mean or median trace over the whole period from each of the repeated traces of the input.

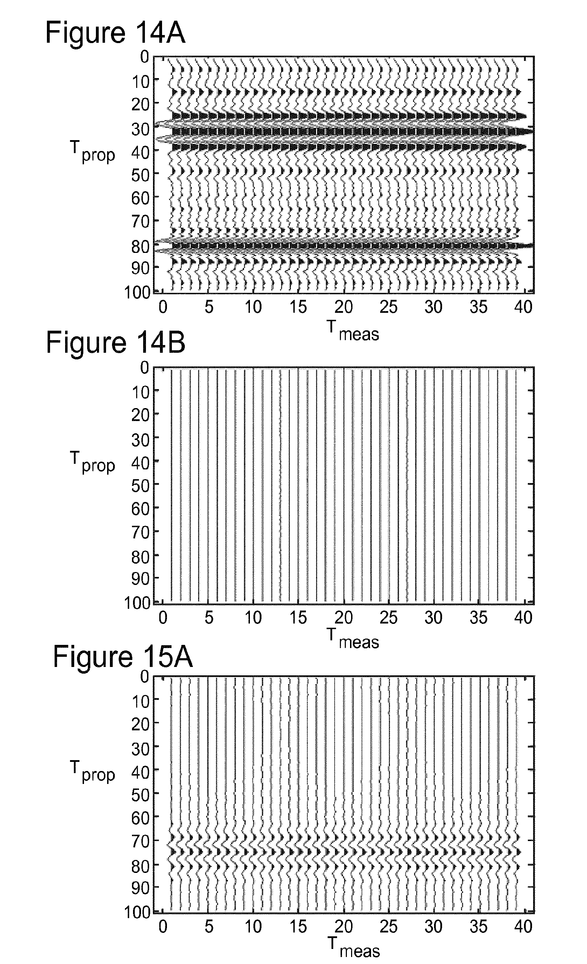

Figure 13A illustrates an estimate of the time-variable wavelet corresponding to the unwanted waves obtained from data recorded by another sensor. Figure 13B is a variation of the estimated time-variable wavelet in Figure 13A. Further, Figure 14A is the propagation of the time-variable wavelet determined by solving an inverse problem using the repeated seismic data and the estimated time-variable wavelet in time domain. The propagation is assumed to be constant in time, which results in a zero variation as shown in Figure 14B.

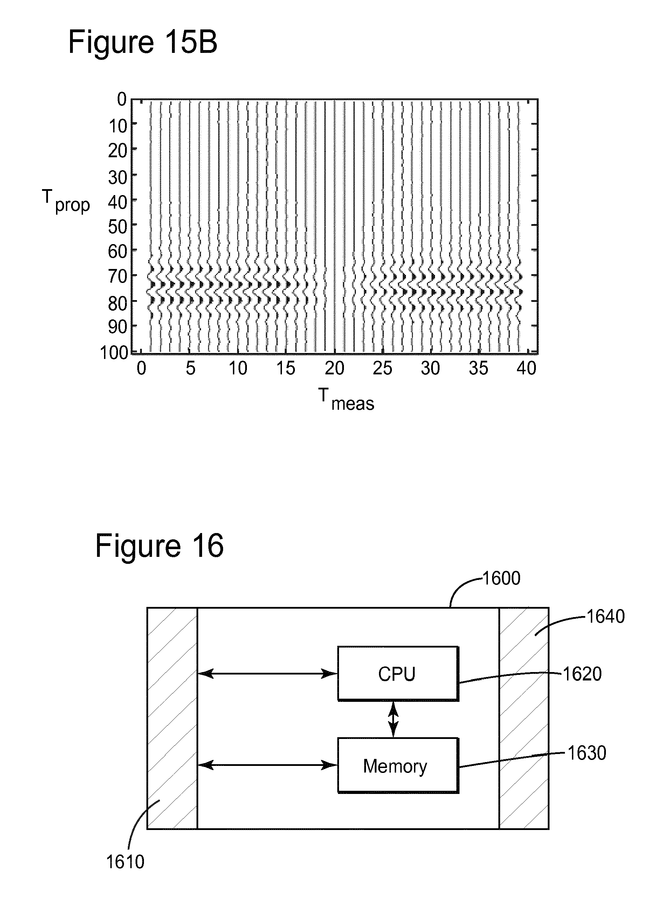

The signal data is then extracted by subtracting a convolution of the estimated time-variable wavelet and the propagation from the repeated seismic data, is illustrated in Figure 15A. The variation of the subtracted signal data is illustrated in Figure 15B.

By comparing Figures12B, 13B and 15B, it becomes apparent that the method of extracting the signal data from the recorded seismic data is reasonably accurate, since the signal data variation is small compared to the signal data, and substantially smaller than the variation of the recorded seismic data. The variation of the unwanted waves that may travel through the weathering layer is (as expected) substantially larger than the variation in the signal data.

Method 600 and other similar embodiments may be performed by a seismic data processing device 1600 as illustrated in Figure 16. The seismic data processing device 1600 may have an interface 1610 configured to receive repeated seismic data gathered using the same seismic survey setup over multiple days. The seismic data processing device 1600 may also have a data processing unit 1620 connected to the interface and configured to process the repeated seismic data by: (1) estimating a time-variable wavelet corresponding to unwanted waves, (2) determining a propagation that is constant in time by solving an inverse problem using the gathered repeated seismic data and the estimated time variable wavelet, and (3) extracting signal data by subtracting a convolution of the estimated time-variable wavelet and the propagation from the repeated seismic data.

The data processing unit 1620 may further be configured to estimate the time-variable wavelet by selecting a subset of the seismic data corresponding to a propagation time range for the multiple days.

The data processing unit 1620 may be configured to determine the propagation by (A) applying a Fourier transformation to the estimated wavelet to obtain a Fourier transform of the estimated wavelet, (B) calculating an inverse matrix of a product of a transposed of the Fourier transform of the estimated wavelet and the Fourier transform of the estimated wavelet, (C) applying a Fourier transformation to the repeated seismic records to obtain a Fourier transform of the repeated seismic records, (D) calculating a product of the transposed of the Fourier transform of the estimated wavelet and the Fourier transform of the repeated seismic records, and (E) determining a Fourier transform of the propagation as a convolution of the inverse matrix and the product.

The seismic data processing device 1600 may also includes a memory 1630 configured to non-transitory storing executable codes which when executed on the data processing unit 1620, and the interface 1610 makes the seismic data processing device 1600 process repeated seismic data gathered from sets of seismic data acquired using the same seismic survey setup over multiple days, according to a method including: (i) estimating a time-variable wavelet corresponding to unwanted waves, (ii) determining a propagation of the time-variable wavelet, which propagation is assumed to be constant in time, by solving an inverse problem in a frequency domain using the repeated seismic data and the estimated time-variable wavelet, and (iii) extracting signal data by subtracting a convolution of the estimated time-variable wavelet and a Fourier transform of the propagation from the repeated seismic data.

The step of estimating the time-variable wavelet (i.e., step i above) may include selecting a subset of the repeated seismic data corresponding to a propagation time range for the multiple days.

The step of determining the propagation (step ii above) may include (A) applying a Fourier transformation to the estimated time-variable wavelet to obtain a Fourier transform of the estimated time-variable wavelet, (B) calculating an inverse matrix of a product of a transposed of the Fourier transform of the estimated time-variable wavelet and the Fourier transform of the estimated time-variable wavelet, (C) applying a Fourier transformation to the repeated seismic records to obtain a Fourier transform of the repeated seismic records, (D) calculating a product of the transposed of the Fourier transform of the estimated wavelet and the Fourier transform of the repeated seismic records, and (E) determining a Fourier transform of the propagation as a convolution of the inverse matrix and the product.

The signal wave may include target waves due to a monitored underground reservoir, and the unwanted waves may include noise and other wave reflections due to reflection sources other than the monitored underground reservoir.

The memory 1630 may be configured to store the repeated seismic data.

The seismic data processing device 1600 may also include a display 1640 configured to display images of an underground formation generated by the data processing unit 1620 using the signal data.

Although the features and elements of the present exemplary embodiments are described in the embodiments in particular combinations, each feature or element can be used alone without the other features and elements of the embodiments or in various combinations with or without other features and elements disclosed herein. The methods or flowcharts provided in the present application may be implemented in a computer program, software or firmware tangibly embodied in a computer-readable storage medium for execution by a specifically programmed computer or processor.

The disclosed exemplary embodiments provide methods and devices for processing seismic data gathered during multiple days. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method (600) for processing seismic data acquired with the same seismic survey setup over long periods of time, the method comprising:
acquiring (S61 0) sets of seismic data using the same seismic survey setup over multiple days, the sets being gathered as repeated seismic data;
estimating (S620) a time-variable wavelet corresponding to unwanted waves;
determining (S630) a propagation of the time-variable wavelet, which propagation is assumed to be constant in time, by solving an inverse problem using the repeated seismic data and the estimated time-variable wavelet; and
extracting (S640) signal data by subtracting a convolution of the estimated time-variable wavelet and the propagation from the repeated seismic data.

2. The method of claim 1, wherein the estimating of the time-variable wavelet includes selecting a subset of the repeated seismic data corresponding to a propagation time range for the multiple days.

3. The method of claim 1, wherein the determining of the propagation includes:
applying a Fourier transformation to the estimated time-variable wavelet to obtain a Fourier transform of the estimated time-variable wavelet;
calculating an inverse matrix of a product of a transposed of the Fourier transform of the estimated time-variable wavelet and the Fourier transform of the estimated time-variable wavelet;
applying a Fourier transformation to the repeated seismic records to obtain a Fourier transform of the repeated seismic records;
calculating a product of the transposed of the Fourier transform of the estimated wavelet and the Fourier transform of the repeated seismic records; and
determining a Fourier transform of the propagation as a convolution of the inverse matrix and the product.

4. The method of claim 1, wherein the seismic survey setup includes one or more sources and plural sensors buried below a weathering layer corresponding to a surveyed formation.

5. The method of claim 1, wherein the repeated seismic data represent amplitude versus a propagation time as recorded by each sensor, for each instance of data gathering during the multiple days.

6. The method of claim 1, wherein the seismic survey setup is placed above an oil reservoir, the signal data being used to monitor an evolution of the reservoir.

7. The method of claim 1, wherein the signal data includes target waves and the unwanted waves include noise and other wave reflections due to other reflection sources than the target waves.

8. A computer readable storage medium (1630) non-transitory storing executable codes which, when executed on a computer (1620), make the computer to process repeated seismic data that are gathered (S610) from sets of seismic data acquired using the same seismic survey setup over multiple days, according to a method comprising:
estimating (S620) a time-variable wavelet corresponding to unwanted waves;
determining (S630) a propagation of the time-variable wavelet, which propagation is assumed to be constant in time, by solving an inverse problem using the repeated seismic data and the estimated time-variable wavelet; and
extracting (S640) signal data by subtracting a convolution of the estimated time-variable wavelet and the propagation from the repeated seismic data.

9. The computer readable storage medium of claim 8, wherein the determining of the propagation includes:
applying a Fourier transformation to the estimated time-variable wavelet to obtain a Fourier transform of the estimated time-variable wavelet;
calculating an inverse matrix of a product of a transposed of the Fourier transform of the estimated time-variable wavelet and the Fourier transform of the estimated time-variable wavelet;
applying a Fourier transformation to the repeated seismic records to obtain a Fourier transform of the repeated seismic records;
calculating a product of the transposed of the Fourier transform of the estimated wavelet and the Fourier transform of the repeated seismic records; and
determining a Fourier transform of the propagation as a convolution of the inverse matrix and the product.

10. A seismic data processing device (1600), comprising:
an interface (1610) configured to receive repeated seismic data gathered using the same seismic survey setup over multiple days; and
a data processing unit (1620) connected to the interface and configured to process the repeated seismic data by
(1) estimating a time-variable wavelet corresponding to unwanted waves;
(2) determining a propagation that is constant in time, by solving an inverse problem using the gathered repeated seismic data and the estimated time variable wavelet; and
(3) extracting signal data by subtracting a convolution of the estimated time-variable wavelet and the propagation from the repeated seismic data.

11. The seismic data processing device of claim 10, wherein the data processing unit is configured to estimate the time-variable wavelet by selecting subset of the seismic data corresponding to a propagation time range for the multiple days.

12. The seismic data processing device of claim 10, wherein the data processing unit is configured to determine the propagation by:
applying a Fourier transformation to the estimated wavelet to obtain a Fourier transform of the estimated wavelet;
calculating an inverse matrix of a product of a transposed of the Fourier transform of the estimated wavelet and the Fourier transform of the estimated wavelet;
applying a Fourier transformation to the repeated seismic records to obtain a Fourier transform of the repeated seismic records;
calculating a product of the transposed of the Fourier transform of the estimated wavelet and the Fourier transform of the repeated seismic records;
determining a Fourier transform of the propagation as a convolution of the inverse matrix and the product.

13. The seismic data processing device of claim 10, wherein the seismic survey setup includes one or more sources and plural sensors buried below a weathering layer of a surveyed formation.

14. The seismic data processing device of claim 10, wherein the seismic survey setup is placed above an oil reservoir, the signal data being used to monitor evolution of the reservoir.

15. The seismic data processing unit of claim 10, further comprising at least one of:
a data storage device configured to store the repeated seismic data; and
a display configured to display images of an underground formation generated by the data processing unit using the signal data.
